# FASCICULE DE BREVET EUROPEEN

(11) **EP 2 705 275 B1**
(45) Date de publication et mention de la délivrance du brevet: **30.03.2016**
(21) Numéro de dépôt: 12724685.8
(22) Date de dépôt: 23.04.2012
(51) Int. Cl.: F16F 15/14

(54) **DISPOSITIF D'AMORTISSEMENT DE TORSION A MASSELOTTES PENDULAIRES A BASCULEMENT LIMITE**
TORSIONDÄMPFENDE VORRICHTUNG MIT PENDELARTIGEN FLIEGEWICHTEN MIT HUBBEGRENZUNG
TORSION DAMPING DEVICE WITH LIMITED TRAVEL PENDULAR FLYWEIGHTS

(30) Priorité: 04.05.2011 FR 1153795
(43) Date de publication de la demande: 12.03.2014
(73) Titulaire: Valeo Embrayages, 80009 Amiens Cedex 2 (FR)
(72) Inventeur: GRIECO, Giovanni, F-92700 Colombes (FR)
(74) Mandataire: Tran, Chi-Hai
(86) Numéro de dépôt international: PCT/FR2012/050888
(87) Numéro de publication internationale: WO 2012/150399

(56) Documents cités:
- EP-A2- 1 744 074
- DE-A1-102009 030 971
- FR-A1- 2 203 951

## Description

L'invention concerne un dispositif d'amortissement de torsion à masselottes pendulaires.

L'invention concerne plus particulièrement un dispositif d'amortissement de torsion, notamment pour un système d'accouplement temporaire, qui comporte :
- une rondelle radiale de support destinée à être entraînée en rotation par un arbre moteur ;
- au moins deux masselottes pendulaires qui sont montées axialement de part et d'autre de la rondelle de support de manière oscillante par rapport à la rondelle de support ;
- au moins un pion dont chaque tronçon d'extrémité est reçu dans un orifice d'une masse pendulaire associée, un tronçon central du pion étant reçu coulissant dans une première fente associée de la rondelle de support.

Il est connu d'agencer des dispositifs d'amortissement de ce type dans les embrayages à friction ou dans les convertisseurs hydrauliques de véhicule automobile.

Le document DE 10 2009 030971 A1 est ainsi considéré comme le document le plus pertinent de l'art antérieur.

Un moteur à explosion présente des acyclismes du fait de la succession des explosions dans les cylindres du moteur. Les moyens amortisseurs de torsion permettent de filtrer ces acyclismes avant de transmettre le couple moteur à une boîte de vitesses. Il est en effet nécessaire d'amortir les vibrations avant qu'elles ne pénètrent dans la boîte de vitesse et ne provoquent une nuisance sonore inacceptable.

Les masselottes pendulaires, encore appelées oscillateurs pendulaires, s'étendent autour de l'axe de rotation de l'arbre moteur et sont libres d'osciller autour d'un axe fictif sensiblement parallèle à l'axe de rotation de l'arbre moteur. Lorsque les masses pendulaires réagissent aux irrégularités de rotation, elles oscillent de manière à ce que le centre de gravité de chacune de ces masses pendulaires oscille autour d'un axe sensiblement parallèle à l'axe de rotation de l'arbre moteur. La position radiale du centre de gravité de chacune des masses pendulaires par rapport à l'axe de rotation de l'arbre moteur ainsi que la distance de ce centre de gravité par rapport à l'axe fictif d'oscillations sont établies de manière à ce que sous l'effet des forces centrifuges, la fréquence d'oscillation de chacune des masses pendulaires soit proportionnelle à la vitesse de rotation de l'arbre moteur, ce multiple pouvant par exemple prendre une valeur proche du rang de l'harmonique prépondérant des vibrations responsables des fortes irrégularités de rotation au voisinage du ralenti.

Dans les dispositifs réalisés selon l'état de la technique, on a constaté que les masselottes pendulaires sont montées avec un jeu qui autorise le basculement latéral des masselottes de part et d'autre d'un plan radial.

Cependant, lorsque la rondelle de support des masselottes pendulaires est entraînée en rotation à très grande vitesse par l'arbre moteur, la force centrifuge qui s'exerce sur les masselottes pendulaire est très intense.

En outre, lorsque le véhicule automobile se déplace, les masselottes pendulaires sont sujettes à des forces d'inertie lorsque le véhicule freine ou accélère.

Du fait des différentes forces qui s'appliquent aux masselottes pendulaires, le jeu de basculement des masselottes se traduit par des des frottements parasites entre les masses et leur support, ce qui change la cinématique de la masselotte et dégrade le fonctionnement du dispositif pendulaire et donc son efficacité de filtrage.

La présente invention propose un dispositif d'amortissement du type décrit précédemment, caractérisé en ce que la rondelle de support porte une première face radiale de butée avant et une deuxième face radiale de butée arrière, lesdites faces de butée étant agencées axialement en vis-à-vis et s'étendant radialement en travers de la fente, et en ce que le tronçon central du pion comporte deux faces radiales opposées d'épaulement, les faces d'épaulement du pion étant reçues avec un jeu axial entre les deux faces de butée pour limiter dans les deux sens les déplacements axiaux du pion par rapport à la rondelle de support.

Selon d'autres caractéristiques de l'invention :
- le pion est un pion de fixation, chaque tronçon d'extrémité du pion de fixation étant fixée à une masselotte pendulaire associée, le pion de fixation formant une entretoise qui maintient les deux masselottes pendulaires écartées axialement d'une distance qui est supérieure audit jeu axial de manière que les masselottes pendulaires n'entrent pas en contact avec la rondelle de support ;
- le pion est un pion d'articulation, l'orifice de chaque masse pendulaire étant une piste dans laquelle le tronçon d'extrémité associé du pion d'articulation est reçu coulissant dans un plan radial ;
- chaque face de butée de la rondelle de support est portée par un premier rebord et un deuxième rebord qui s'étendent radialement en saillie depuis les bords d'extrémité axiale de la fente ;
- une première plaque est fixée à plat contre une première face d'extrémité axiale de la rondelle de support, la première plaque comportant une ouverture agencée en coïncidence avec la fente de la rondelle de support, la première plaque portant le premier rebord ;
- une deuxième plaque est fixée à plat contre une deuxième face d'extrémité axiale de la rondelle de support, la deuxième plaque comportant une ouverture agencée en coïncidence avec la fente de la rondelle de support, la deuxième plaque portant le deuxième rebord ;
- le tronçon central du pion comporte un collet, chacune des faces radiales opposées du collet formant une desdites faces d'épaulement du pion ;
- le dispositif comporte au moins un pion de fixation qui est agencé dans une première fente associée et au moins un pion d'articulation qui est agencé dans une deuxième fente de guidage associée, chacune des faces de butée avant associées des fentes étant portée par une première plaque commune ;
- chacune des faces de butée arrière associées des fentes est portée par une deuxième plaque commune.

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue de face d'un dispositif réalisé selon les enseignements de l'invention ;
- la figure 2 est une vue en section selon le plan de coupe 2-2 de la figure 1 ;
- la figure 3 est une vue en perspective éclatée qui représente des masselottes pendulaires du dispositif de la figure 1 qui sont agencées de part et d'autre d'une rondelle de support ;
- la figure 4 est une vue en section selon le plan de coupe 4-4 de la figure 1 ;
- la figure 5 est une vue en section selon le plan de coupe 5-5 de la figure 1 ;
- la figure 6 est une vue similaire à celle de la figure 4 qui représente une variante de réalisation de l'invention.

Pour la suite de la description, on adoptera des orientations :
- axiale dirigée d'arrière en avant selon l'axe de rotation du dispositif d'amortissement, et indiquée par la flèche "A" des figures,
- radiale dirigée orthogonalement à l'axe du dispositif d'amortissement de l'intérieur vers l'extérieur en s'éloignant dudit axe ;
- circonférentielle dirigée orthogonalement à l'axe du dispositif d'amortissement et orthogonalement à la direction radiale.

Pour la suite de la description, des éléments présentant des fonctions similaires, identiques ou analogues seront désignés par des mêmes numéros de référence.

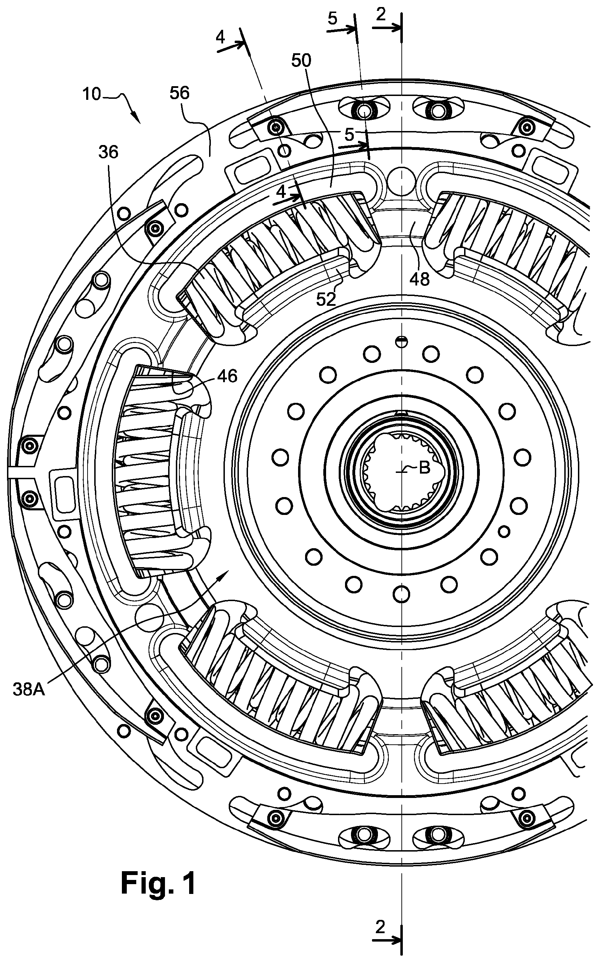

On a représenté à la figure 1 un dispositif 10 d'amortissement de torsion réalisé selon un premier mode de réalisation de l'invention. Le dispositif 10 d'amortissement est destiné à être agencé dans un système d'accouplage temporaire de véhicule automobile. Le dispositif 10 d'amortissement est ici destiné à être agencé dans un convertisseur de couple (non représenté) pour amortir les torsions de l'accouplage entre le carterde torsion du convertisseur de couple et avec l'arbre d'entrée d'une de boîte de vitesse automatique.

Le dispositif 10 d'amortissement de torsion réalisé selon les enseignements de l'invention est aussi applicable à tout autre type de systèmes d'embrayage..

Le dispositif 10 d'amortissement de torsion permet d'amortir les torsions entre un premier arbre (non représenté) moteur et un deuxième arbre (non représenté) mené coaxiaux d'axe "B".de torsion

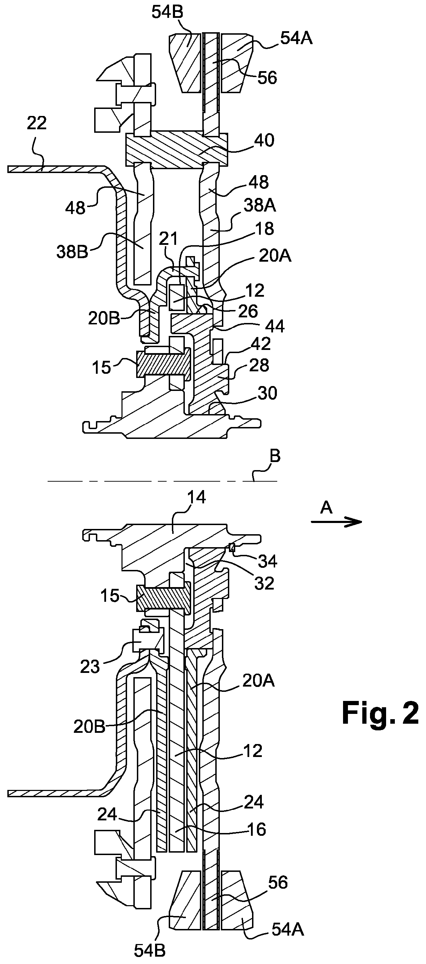

Comme représenté à la figure 2, le dispositif 10 comporte un élément de sortie de couple qui est ici formé par un voile 12 radial de sortie. Le voile 12 de sortie présente une forme de rondelle circulaire coaxiale à l'axe "B".

Le voile 12 de sortie est destiné à être lié en rotation au deuxième arbre mené par l'intermédiaire d'un moyeu mené 14. Le voile 12 de sortie est lié en rotation avec le moyeu mené 14 par l'intermédiaire de rivets 15.

Le voile 12 de sortie présente trois pattes 16 radiales dont une est visible en bas de la figure 2. Les pattes 16 sont agencées régulièrement autour de l'axe "B" globalement à 120° les unes des autres. Chaque patte 16 s'étend radialement en saillie par rapport au bord périphérique extérieur 18 du voile 12 de sortie. Le bord périphérique 18 est visible en haut de la figure 2.

Le dispositif 10 d'amortissement présente en outre un élément d'entrée de couple qui est ici formé par une première rondelle radiale d'entrée 20A avant et par une deuxième rondelle radiale d'entrée 20B arrière. Les rondelles d'entrée 20A, 20B sont parallèles entre elles et elles sont agencées axialement de part et d'autre du voile 12 de sortie.

La rondelle d'entrée 20B arrière est liée en rotation avec la rondelle d'entrée 20A avant par l'intermédiaire de bras axiaux 21, comme cela est représenté en haut de la figure 2.

Les deux rondelles d'entrée 20A, 20B sont liées en rotation au premier arbre moteur par l'intermédiaire d'un moyeu moteur 22 cannelé sur lequel est monté mobile axialement un piston de lock-up, non représenté. Le piston de lock-up est mobile entre une position dépontée et une position de pontage du convertisseur permettant d'accoupler le carter du convertisseur de couple à l'arbre d'entrée de la boîte automatique. Le moyeu moteur 22 est agencé à l'arrière du dispositif 10 d'amortissement. La rondelle d'entrée 20B arrière est fixée au moyeu moteur 22 par l'intermédiaire de rivets 23 dont un est représenté en bas de la figure 2.

Chaque rondelle d'entrée 20A, 20B présente un flasque radial qui est pourvu d'un passage central pour permettre le passage de l'arbre mené et du moyeu mené 14 du voile 12 de sortie.

Chaque rondelle d'entrée 20A, 20B comporte en outre trois pattes 24 extérieures de poussée qui sont agencées en coïncidence avec les pattes 16 du voile 12 de sortie. L'une des pattes 24 de poussée est représentée en bas de la figure 2.

Lorsque les deux rondelles d'entrée 20A, 20B sont assemblées, leurs flasques sont écartés d'une distance axiale suffisante pour permettre au voile 12 de sortie de tourner sans frottement entre les deux rondelles d'entrée 20A, 20B.

La rondelle d'entrée 20A avant est montée tournante librement sur une première face cylindrique extérieure 26 de guidage d'un palier 28 central. Le palier 28 est lui-même monté tournant sur une face cylindrique extérieure 30 d'un tronçon avant du moyeu mené 14 du voile 12 de sortie. Les déplacements axiaux du palier 28 sont limités vers l'arrière par une face d'épaulement 32 du moyeu mené 14, tandis qu'ils sont limités axialement vers l'avant par un anneau élastique 34 qui est monté sur le moyeu mené 14.

Le dispositif 10 d'amortissement comporte en outre des organes élastiques 36 à action circonférentielle formant des premiers moyens d'amortissement de torsion. De manière non limitative, le dispositif 10 d'amortissement comporte ici six organes élastiques 36. Les organes élastiques 36 sont ici formés par des ressorts hélicoïdaux d'axe principal d'orientation circonférentielle.

Comme cela est visible à la figure 1, les organes élastiques 36 sont agencés en une rangée circulaire autour du bord périphérique 18 du voile 12.

Les organes élastiques 36 sont répartis en trois groupes de deux organes élastiques 36. Les organes élastiques 36 de chaque groupe sont logés circonférentiellement en série, c'est-à-dire bout à bout, entre deux pattes 16 du voile 12 de sortie. Dans le mode de réalisation, les organes élastiques 36 étendent tous à une même distance radiale.

Les deux organes élastiques 36 de chaque groupe étant montés en série, les deux extrémités en vis-à-vis de ces deux organes élastiques 36 sont susceptibles de prendre appui l'une sur l'autre lors de la transmission d'un couple entre le voile 12 de sortie et les rondelles d'entrée 20A, 20B.

Pour que les organes élastiques 36 soient sollicités sensiblement selon leur axe principal circonférentiel, il est connu d'équiper le dispositif 10 d'amortissement avec un organe de phasage.

Comme illustré à la figure 2, un tel organe de phasage est ici formé d'une première rondelle radiale de phasage 38A avant et d'une deuxième rondelle de phasage 38B arrière. La deuxième rondelle radiale de phasage 38B est agencée parallèlement à la première rondelle de phasage 38A. Les rondelles de phasage 38A, 38B sont agencées axialement de part et d'autre des rondelles d'entrée 20A, 20B et des organes élastiques 36.

La rondelle de phasage 38B arrière est fixée à la rondelle de phasage 38A avant par l'intermédiaire d'entretoises 40 d'axe axial. Chaque extrémité de l'entretoise 40 est fixée à une rondelle de phasage 38A, 38B associée, ici par déformation de ladite extrémité, à la manière d'un rivet.

Les entretoises 40 permettent de maintenir les deux rondelles de phasage 38A, 38B écartées axialement d'une distance constante. Lorsque les deux rondelles de phasage 38A, 38B sont assemblées, leurs flasques sont écartés d'une distance suffisante pour permettre aux rondelles d'entrée 20A, 20B de tourner sans frottement.

La distance d'écartement axial entre les deux rondelles de phasage 38A, 38B est inférieure au diamètre des organes élastiques 36.

Les rondelles de phasage 38A, 38B sont montées libres en rotation par rapport au voile 12 de sortie, d'une part, et par rapport aux rondelles d'entrée 20A, 20B, d'autre part.

La rondelle de phasage 38A avant est montée tournante librement sur une deuxième face cylindrique de guidage 42 du palier 28. La deuxième face cylindrique de guidage 42 est agencée axialement en avant de la première face cylindrique de guidage 26. La deuxième face cylindrique de guidage 42 présente un diamètre inférieur à celui de la première face cylindrique de guidage 26 du palier 28. Une face radiale d'épaulement 44 tournée vers l'avant sépare les deux faces cylindriques de guidage 26, 42.

La rondelle de phasage 38A avant est appuyée axialement vers l'arrière contre cette face d'épaulement 44 pour positionner axialement les rondelles de phasage 38A, 38B par rapport aux rondelles d'entrée 20A, 20B.

Chaque rondelle de phasage 38A, 38B est en outre ajourée de six fenêtres 46 dont chacune est agencée en coïncidence avec un organe élastique 36 associé, comme représenté à la figure 1.

Les fenêtres 46 sont séparées circonférentiellement les unes des autres par des pattes 48 radiales de phasage. Les pattes 48 de phasage sont représentées en haut de la figure 2. Chaque patte 48 de phasage est incurvée vers la rondelle d'entrée 20A, 20B associée.

Comme représenté à la figure 1, une patte 48 de phasage de chaque rondelle de phasage 38A, 38B est interposée circonférentiellement entre les deux organes élastiques 36 en série de chaque groupe.

Lors du fonctionnement du dispositif 10 d'amortissement, les organes élastiques 36 sont comprimés entre les pattes 24 de poussée des rondelles d'entrée 20A, 20B et les pattes 16 du voile 12 de sortie de manière à amortir les variations brusques de couple. Les rondelles d'entrée 20A, 20B tournent d'un angle déterminé autour de l'axe "B" par rapport au voile 12 de sortiesortie en provoquant la compression des deux organes élastiques 36 de chaque groupe. Les pattes 48 de phasage des rondelles de phasage 38A, 38B transmettent l'effort de compression d'un organe élastique 36 vers l'autre. Du fait de cette compression, les rondelles de phasage 38A, 38B tournent de la moitié de l'angle déterminé par rapport aux rondelles d'entrée 20A, 20B.

Dans l'exemple représenté à la figure 1, les rondelles de phasage 38A, 38B forment des organes de guidage pour les organes élastiques 36. A cet effet, chaque fenêtre 46 est bordée :
- radialement vers l'intérieur par une oeillere 50 intérieure qui s'étend depuis un bord circonférentiel intérieur de la fenêtre 46, et
- radialement vers l'extérieur par une oeillere 52 extérieure qui s'étend depuis un bord circonférentiel extérieur de la fenêtre 46.

Les oeilleres 50, 52 forment une retenue axiale pour l'organe élastique 36 associé.

Les fenêtres 46 forment ainsi des logements pour recevoir les organes élastiques 36 et pour les maintenir en position axialement et radialement.

Le dispositif 10 d'amortissement est en outre équipé de deuxièmes moyens d'amortissement de torsion du type pendulaire. De tels deuxième moyens d'amortissement comportent au moins une paire de masselottes pendulaires 54A, 54B qui sont montées oscillantes dans un plan radial sur une rondelle de support. Les deux masselottes pendulaires 54A, 54B d'une paire sont agencées axialement en vis-à-vis l'une de l'autre.

La rondelle de support est entraînée en rotation par l'arbre moteur, avant ou après amortissement par les organes élastiques 36.

La rondelle de support est ici formée par la rondelle de phasage 38A avant.

En variante, la rondelle de support est formée par le voile ou par l'une des rondelles d'entrée.

Comme représenté à la figure 2, les masselottes pendulaires 54A, 54B sont agencées sur une bande périphérique extérieure 56 de la rondelle de phasage 38A avant de manière à être soumise à une force centrifuge maximale lors de la rotation rapide du dispositif 10 d'amortissement.

Les masselottes pendulaires 54A, 54B d'une paire sont agencées axialement de part et d'autre de la rondelle de support. Ainsi, la masselotte pendulaire 54A avant est agencée en vis-à-vis de la face avant de la rondelle de phasage 38A avant, tandis que la masselotte pendulaire 54B arrière est agencée en vis-à-vis de la face arrière de la rondelle de phasage 38A avant.

Dans l'exemple représenté aux figures, le dispositif 10 d'amortissement présente six paires de masselottes pendulaires 54A, 54B qui sont réparties régulièrement sur le long de la bande périphérique extérieure 56 de la rondelle de phasage 38A avant. Les masselottes pendulaires 54A, 54B sont agencées en cercle autour de la rangée circulaire d'organes élastiques 36. Ainsi, le dispositif 10 d'amortissement est équilibré.

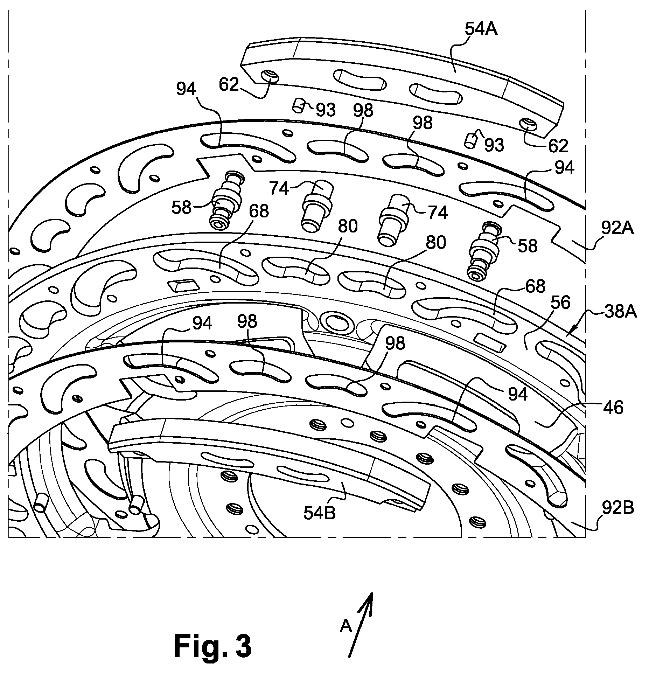

Comme représenté à la figure 3, chaque masselotte pendulaire 54A, 54B présente une forme de plaquette qui s'étend dans un plan radial. Chaque masselotte pendulaire 54A, 54B est incurvée en un arc de cercle qui s'étend sur un angle d'un peu moins de 60°, de manière que le contour extérieur de chaque masselotte pendulaire 54A, 54B épouse le bord périphérique extérieur de la rondelle de phasage 38A avant.

Les six paires de masselottes pendulaires 54A, 54B présentent une structure identique, et elles sont montées de manière identique dans le dispositif 10 d'amortissement. Une seule paire de masselottes pendulaires 54A, 54B sera décrite par la suite, la description étant applicable aux autres paires de masselottes pendulaires 54A, 54B.

Comme représenté à la figure 3, les deux masselottes pendulaires 54A, 54B de la paire sont fixées l'une à l'autre par l'intermédiaire de deux pions axiaux de fixation 58. Chaque pion de fixation est agencé à une extrémité circonférentielle associée des masselottes pendulaires 54A, 54B.

Les deux pions de fixation 58 présentent une structure identique, et ils sont montés de manière identique dans le dispositif 10 d'amortissement. Un seul pion de fixation 58 sera décrit par la suite, la description étant applicable à l'autre pion de fixation 58.

Chaque tronçon d'extrémité axiale libre 60 du pion de fixation 58 est fixé dans un orifice 62 d'une masselotte pendulaire 54A, 54B associée.

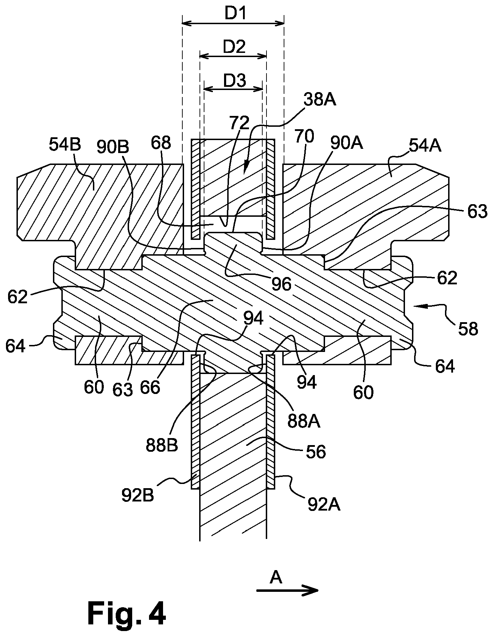

Comme représenté à la figure 4, chaque tronçon d'extrémité libre 60 du pion de fixation 58 est délimité vers le centre dudit pion par une face radiale 63 qui est destinée à venir axialement en appui contre la masselotte pendulaire 54A, 54B associée. Le pion de fixation 58 forme ainsi une entretoise qui maintient les deux masselottes pendulaires 54A, 54B écartées axialement d'une distance "D1".

Les pions de fixation 58 sont fixés aux masselottes 54A, 54B par déformation de leur extrémité axiale libre 64, à la manière d'un rivet. Les masselottes pendulaires 54A, 54B sont ainsi fixées rigidement l'une à l'autre.

La bande périphérique extérieure 56 de la rondelle de phasage 38A avant comporte deux premières fentes 68 traversantes axialement pour permettre le passage d'un tronçon central 66 de chaque pion de fixation 58.

Comme représenté à la figure 3, chaque première fente 68 présente une forme apte à permettre le passage du tronçon central lors du mouvement d'oscillationl'oscillation des masselottes. Chaque première fente 68 s'étend globalement le long d'un axe orienté circonférentiellement. Chaque première fente 68 est incurvée de sorte que la concavité soit dirigée vers l'intérieur.

Le tronçon central 66 d'un pion de fixation 58 est ainsi reçu coulissant dans un plan radial dans la première fente 68 associée.

Comme représenté à la figure 3, les deux masselottes pendulaires 54A, 54B de la paire sont articulées avec la rondelle de phasage 38A avant par l'intermédiaire de deux pions axiaux d'articulation 74. Les pions d'articulation 74 sont agencés circonférentiellement entre les deux pions de fixation 58.

Les deux pions d'articulation 74 présentent une structure identique, et ils sont montés de manière identique dans le dispositif 10 d'amortissement. Un seul pion d'articulation 74 sera décrit par la suite, la description étant applicable à l'autre pion d'articulation 74.

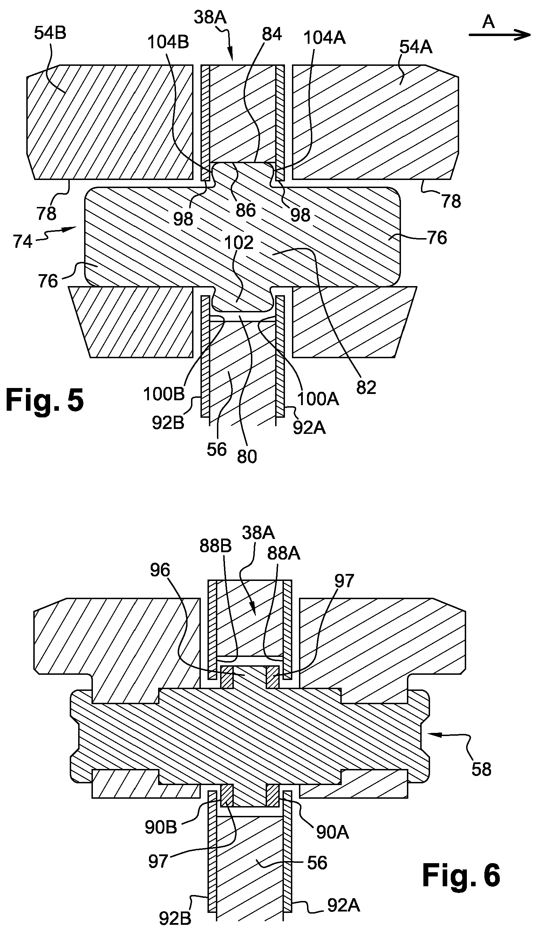

Comme représenté à la figure 5, chaque tronçon d'extrémité axiale libre 76 du pion d'articulation 74 est reçu coulissant dans un plan radial dans un orifice 78 d'une masselotte pendulaire 54A, 54B associée. Les orifices 78 en vis-à-vis des deux masselottes pendulaires 54A, 54B présentent une forme identique par symétrie par rapport à un plan radial.

Comme représenté à la figure 3, l'orifice 78 associé présente la forme d'une piste s'étendant globalement le long d'un axe circonférentiel. Chaque orifice 78 est incurvée de manière que sa concavité soit orientée radialement vers l'extérieur. Le pion d'articulation 74 est ainsi susceptible de coulisser dans un plan radial par rapport aux masselottes pendulaire 54A, 54B le long des orifices 78 en vis-à-vis.

La bande périphérique extérieure 56 de la rondelle de phasage 38A avant comporte deux deuxièmes fentes de guidage 80 traversantes axialement pour permettre le passage d'un tronçon central 82 de chaque pion d'articulation 74.

Comme représenté à la figure 3, chaque deuxième fente de guidage 80 présente une forme apte à guider le coulissement dans un plan radial du pion d'articulation 74 par rapport à la rondelle de phasage 38A avant. Chaque deuxième fente de guidage 80 s'étend globalement le long d'un axe orienté circonférentiellement. Chaque deuxième fente de guidage 68 est incurvée de sorte que la concavité soit dirigée vers l'intérieur.

Le tronçon central 82 d'un pion d'articulation 74 est ainsi reçu coulissant dans un plan radial dans la deuxième fente de guidage 80 associée.

La face cylindrique extérieure 84 du tronçon central 82 du pion d'articulation 74 est susceptible de rouler contre le bord radialement extérieur 86 de la deuxième fente de guidage 80 associée lorsque les masselottes pendulaires 54A, 54B sont tirées vers l'extérieur par un effort centrifuge.

Le dispositif 10 d'amortissement comporte en outre des moyens pour empêcher les masselottes pendulaires 54A, 54B de venir en contact avec la rondelle de support formée par la rondelle de phasage 38A avant.

Pour ce faire et comme cela est illustré à la figure 4, la rondelle de phasage 38A avant porte une première face radiale de butée arrière 88A et une deuxième face radiale de butée avant 88B. Lesdites faces de butée 88A, 88B sont agencées axialement en vis-à-vis et elles s'étendent radialement en travers de la première fente de guidage 68.

Le tronçon central 66 du pion de fixation 58 comporte deux faces radiales opposées d'épaulement 90A, 90B qui sont reçues avec un jeu axial entre les deux faces de butée 88A, 88B pour limiter dans les deux sens les déplacements axiaux du pion de fixation 58 par rapport à la rondelle de phasage 38A avant.

Plus particulièrement, la face de butée 88B avant est portée par un premier rebord qui s'étend radialement en saillie depuis le bord d'extrémité arrière de la première fente de guidage 68, tandis que la face de butée 88A arrière est portée par un deuxième rebord qui s'étend radialement en saillie depuis le bord d'extrémité avant de la première fente de guidage 68.

Dans le mode de réalisation représenté aux figures, la face de butée 88A arrière est portée par une première plaque 92A radiale qui est agencée à plat contre la face avant de la rondelle de phasage 38A avant. La face de butée 88B avant est portée par une deuxième plaque 92B radiale qui est agencée à plat contre la face arrière de la rondelle de phasage 38A avant.

Les deux plaques 92A, 92B enserrent ainsi axialement la bande périphérique extérieure 56 de la rondelle de phasage 38A avant.

Les deux plaques 92A, 92B sont fixées à la rondelle de phasage 38A avant par l'intermédiaire de rivets 93 communs, comme cela est représenté à la figure 3.

Les faces de butée 88A arrière de toutes les premières fentes de guidage 68 sont portées par une plaque 92A avant commune, tandis que les faces de butée 88B avant de toutes les premières fentes de guidage 68 sont portées par une plaque 92B arrière commune.

Comme représenté à la figure 3, chaque plaque 92A, 92B présente ainsi la forme d'un anneau aplati dans un plan radial qui présente les mêmes dimensions radiales que la bande périphérique extérieure 56 de la rondelle de phasage 38A avant.

Chaque plaque 92A, 92B est munie de premières ouvertures 94 qui sont agencées en coïncidence avec les premières fentes de guidage 68 de la rondelle de phasage 38A avant. Les premières ouvertures 94 présentent une forme similaire à celles des premières fentes de guidage 68 correspondantes. Cependant, les dimensions des premières ouvertures 94 sont restreintes par rapport aux dimensions des premières fentes 68 de manière qu'une portion périphérique des premières ouvertures 94 forme le rebord qui porte les faces de butées 88A, 88B.

En outre, en se reportant à la figure 4, le tronçon central 66 du pion de fixation 58 comporte un collet 96 qui est délimité radialement par la face cylindrique extérieure 70 et qui est délimité axialement par la face d'épaulement avant 90A et par la face d'épaulement arrière 90B.

Le collet 96 présente un diamètre qui est supérieur à la largeur des ouvertures 94 des plaques 92A, 92B. Le collet 96 est en outre reçu avec un jeu radial dans la première fente de guidage 68 associée. Ainsi, le collet 96 est emprisonné axialement entre les deux plaques 92A, 92B.

La largeur "D3" axiale du collet 96 est légèrement inférieure à la distance axiale "D2" qui est réservée entre les deux faces de butée 88A, 88B. Ainsi le collet 96 est reçu avec un jeu axial "D2-D3" entre les deux faces de butée 88A, 88B. Le jeu axial "D2-D3" est égal à la différence entre la distance axiale "D2" entre les deux faces de butée 88A, 88B et la largeur "D3" axiale du collet 96.

Le jeu axial "D2-D3" est inférieur à la distance axiale entre une masselotte pendulaire 54A, 54B et la plaque 92A, 92B en vis-à-vis de manière que les masselottes pendulaires 54A, 54B ne viennent jamais en contact avec les plaques 92A, 92B.

En outre, le collet 96 est aussi susceptible de venir en contact avec les faces de butée 88A, 88B pour empêcher le basculement des masselottes pendulaires 54A, 54B autour d'un axe circonférentiel. En d'autres termes, le diamètre relativement important du collet 96 permet de maintenir les masselottes pendulaires 54A, 54B dans leur plan radial de coulissement.

Selon une variante de l'invention qui est représentée à la figure 6, deux rondelles de glissement 97 sont interposées entre les faces de butée 88A, 88B et les faces d'épaulement 90A, 90B. Ces rondelles de glissement 97 sont réalisées en un matériau à faible coefficient de frottement de manière à favoriser l'oscillation des masselottes pendulaires 54A, 54B par rapport à la rondelle de phasage 38A avant lorsque le pion de fixation 58 est en butée contre l'une des faces de butée 88A, 88B.

Comme cela est illustré à la figure 3, les plaques 92A, 92B comportent par ailleurs des deuxième ouvertures 98 qui sont agencées en coïncidence avec les deuxièmes fentes de guidage 80 de la rondelle de phasage 38A avant.

Les deuxièmes ouvertures 98 présentent une forme similaire à celles des deuxièmes fentes de guidage 80 correspondantes. Cependant, les dimensions des deuxièmes ouvertures 98 sont restreintes par rapport aux dimensions des deuxièmes fentes 80 de manière qu'une portion périphérique des deuxièmes ouvertures 98 forme un rebord qui s'étend radialement en saillie de part et d'autre de la deuxième fente de guidage 80.

Comme cela est illustré à la figure 5, le rebord avant porte une face de butée 100A arrière, tandis que le rebord arrière porte une face de butée 100B avant.

En outre, le tronçon central 82 du pion d'articulation 74 comporte un collet 102 qui est délimité radialement par la face cylindrique extérieure 84 et qui est délimité axialement par une face d'épaulement avant 104A et par une face d'épaulement arrière 104B.

Le collet 102 présente un diamètre qui est supérieur à la largeur des deuxièmes ouvertures 98 des plaques 92A, 92B. Le collet 102 est en outre reçu avec un jeu radial dans la deuxième fente de guidage 78 associée. Ainsi, le collet 102 est emprisonné axialement entre les deux plaques 92A, 92B.

Le collet 102 est reçu avec un jeu axial entre les deux plaques 92A, 92B pour permettre le coulissement du pion d'articulation 74 le long de la fente de guidage 78.

Grâce au collet 102, le pion d'articulation 74 est ainsi retenu axialement dans la deuxième fente de guidage 78 associée.

En outre, le collet 102 est aussi susceptible de venir en contact avec les faces de butée 100A, 100B pour empêcher le basculement des masselottes pendulaires 54A, 54B autour d'un axe circonférentiel.

Le dispositif 10 d'amortissement réalisé selon les enseignements de l'invention permet de limiter le basculement des masselottes pendulaires 54A, 54B par rapport à la rondelle de support. En effet, le jeu axial "D2-D3" est aisé à maîtriser indépendamment du jeu radial avec lequel les pions 58, 74 sont reçus dans la fente de guidage 68, 80 associée. Ainsi, le basculement des masselottes pendulaires 54A, 54B est limité dans les deux sens par le contact entre les faces de butée 88A, 88B, 100A, 100B avec les faces d'épaulement 90A, 90B, 104A, 104B associées des pions 58, 74.

## Revendications

1. Dispositif (10) d'amortissement de torsion notamment pour un système d'accouplement temporaire, qui comporte :
- une rondelle radiale de support (38A) destinée à être entraînée en rotation par un arbre moteur ;
- au moins deux masselottes pendulaires (54A, 54B) qui sont montées axialement de part et d'autre de la rondelle de support (38A) de manière oscillante par rapport à la rondelle de support (38A) ;
- au moins un pion (58, 74) dont chaque tronçon d'extrémité (60, 76) est reçu dans un orifice (62, 78) d'une masse pendulaire (54A, 54B) associée, un tronçon central (66, 82) du pion (58, 74) étant reçu coulissant dans une fente (68, 80) associée de la rondelle de support (38A) ;
**caractérisé en ce que** la rondelle de support (38A) porte une première face radiale de butée (88B, 100B) avant et une deuxième face radiale de butée (88A, 100A) arrière, lesdites faces de butée (88A, 88B, 100A, 100B) étant agencées axialement en vis-à-vis et s'étendant radialement en travers de la fente (68, 80), et **en ce que** le tronçon central (66, 82) du pion (58, 74) comporte deux faces radiales opposées d'épaulement (90A, 90B, 104A, 104B), les faces d'épaulement (90A, 90B, 104A, 104B) du pion étant reçues avec un jeu axial (D2-D3) entre les deux faces de butée (88A, 88B, 100A, 100B) pour limiter dans les deux sens les déplacements axiaux du pion (58, 74) par rapport à la rondelle de support (38A).

2. Dispositif (10) selon la revendication précédente, **caractérisé en ce que** le pion est un pion de fixation (58), chaque tronçon d'extrémité (60) du pion de fixation (58) étant fixée à une masselotte pendulaire (54A, 54B) associée, le pion de fixation (58) formant une entretoise qui maintient les deux masselottes pendulaires (54A, 54B) écartées axialement d'une distance (D1) qui est supérieure audit jeu axial (D2-D3) de manière que les masselottes pendulaires (54A, 54B) n'entrent pas en contact avec la rondelle de support (38A).

3. Dispositif (10) selon la revendication 1, **caractérisé en ce que** la fente est une fente de guidage (80) et **en ce que** le pion est un pion d'articulation (74), l'orifice de chaque masse pendulaire étant une piste (78) dans laquelle le tronçon d'extrémité (76) associé du pion d'articulation (74) est reçu coulissant dans un plan radial.

4. Dispositif (10) selon l'une quelconque des revendications précédentes, **caractérisé en ce que** chaque face de butée (88A, 88B, 100A, 100B) de la rondelle de support (38A) est portée par un premier rebord et un deuxième rebord qui s'étendent radialement en saillie depuis les bords d'extrémité axiale de la fente de guidage (68, 80).

5. Dispositif (10) selon la revendication précédente, **caractérisé en ce qu'**une première plaque (92A) est fixée à plat contre une première face d'extrémité axiale de la rondelle de support (38A), la première plaque (92A) comportant une ouverture (94, 98) agencée en coïncidence avec la fente (68, 80) de la rondelle de support (38A), et **en ce que** la première plaque (92A) porte le premier rebord.

6. Dispositif (10) selon la revendication précédente, **caractérisé en ce qu'**une deuxième plaque (92B) est fixée à plat contre une deuxième face d'extrémité axiale de la rondelle de support (38A), la deuxième plaque (92B) comportant une ouverture (94, 98) agencée en coïncidence avec la fente (68, 80) de la rondelle de support (38A), et **en ce que** la deuxième plaque (92B) porte le deuxième rebord.

7. Dispositif (10) selon l'une quelconque des revendications précédentes, **caractérisé en ce que** le tronçon central (66, 82) du pion (58, 74) comporte un collet (96, 102), chacune des faces radiales opposées du collet formant une desdites faces d'épaulement (90A, 90B, 100A, 100B) du pion (58, 74).

8. Dispositif (10) selon les revendications 2, 3 et l'une quelconque des revendications 5 à 7 prises en combinaison, **caractérisé en ce qu'**il comporte au moins un pion de fixation (58) qui est agencé dans une première fente (68) associée et au moins un pion d'articulation (74) qui est agencé dans une deuxième fente de guidage (80) associée, chacune des faces de butée (88B, 100B) avant associées des fentes (68, 80) étant portée par une première plaque commune (92B).

9. Dispositif (10) selon la revendication précédente, **caractérisé en ce que** chacune des faces de butée (88A, 100A) arrière associées des fentes (68, 80) est portée par une deuxième plaque commune (92A).

## Patentansprüche

1. Vorrichtung (10) zur Torsionsdämpfung insbesondere für ein temporäres Kopplungssystem, die Folgendes umfasst:
- eine radiale Tragscheibe (38A), die dazu bestimmt ist, durch eine Motorwelle rotatorisch angetrieben zu werden;
- wenigstens zwei Pendelgewichte (54A, 54B), die axial beiderseits der Tragscheibe (38A) so montiert sind, dass sie in Bezug auf die Tragscheibe (38A) oszillieren;
- wenigstens eine Erhebung (58, 74), wovon jedes Endstück (60, 76) in einer Öffnung (62, 78) einer zugeordneten Pendelmasse (54A, 54B) aufgenommen ist und wobei ein Mittelstück (66, 82) der Erhebung (58, 74) in einem Schlitz (68, 80), der zu der Tragscheibe (38A) gehört, gleitend aufgenommen ist;
**dadurch gekennzeichnet, dass** die Tragscheibe (38A) eine vordere erste radiale Anschlagfläche (88B, 100B) und eine hintere zweite radiale Anschlagfläche (88A, 100A) trägt, wobei die Anschlagflächen (88A, 88B, 100A, 100B) axial einander gegenüber angeordnet sind und sich radial durch den Schlitz (68, 80) erstrecken, und dass das Mittelstück (66, 82) der Erhebung (58, 74) zwei gegenüberliegende radiale Schulterflächen (90A, 90B, 104A, 104B) aufweist, wobei die Schulterflächen (90A, 90B, 104A, 104B) der Erhebung mit axialem Spiel (D2-D3) zwischen den zwei Anschlagflächen (88A, 88B, 100A, 100B) aufgenommen sind, um die axialen Verlagerungen der Erhebung (58, 74) in den zwei Richtungssinnen in Bezug auf die Tragscheibe (38A) zu begrenzen.

2. Vorrichtung (10) nach dem vorhergehenden Anspruch, **dadurch gekennzeichnet, dass** die Erhebung eine Befestigungserhebung (58) ist, wobei jedes Endstück (60) der Befestigungserhebung (58) an einem zugeordneten Pendelgewicht (54A, 54B) befestigt ist, wobei die Befestigungserhebung (58) einen Abstandshalter bildet, der die zwei Pendelgewichte (54A, 54B) axial um eine Strecke (D1) beabstandet hält, die größer als das axiale Spiel (D2-D3) ist, derart, dass die Pendelgewichte (54A, 54B) nicht mit der Tragscheibe (38A) in Kontakt gelangen.

3. Vorrichtung (10) nach Anspruch 1, **dadurch gekennzeichnet, dass** der Schlitz ein Führungsschlitz (80) ist und dass die Erhebung eine Anlenkungserhebung (74) ist, wobei die Öffnung jeder Pendelmasse eine Bahn (78) ist, in der das zugeordnete Endstück (76) der Anlenkungserhebung (74) in einer radialen Ebene gleitend aufgenommen ist.

4. Vorrichtung (10) nach einem der vorhergehenden Ansprüche, **dadurch gekennzeichnet, dass** jede Anschlagfläche (88A, 88B, 100A, 100B) der Tragscheibe (38A) von einem ersten Rand und einem zweiten Rand getragen wird, die sich radial vorstehend von den axialen Endkanten des Führungsschlitzes (68, 80) erstrecken.

5. Vorrichtung (10) nach dem vorhergehenden Anspruch, **dadurch gekennzeichnet, dass** eine erste Platte (92A) flach an einer ersten axialen Stirnfläche der Tragscheibe (38A) befestigt ist, wobei die erste Platte (92A) eine Öffnung (94, 98) aufweist, die in Übereinstimmung mit dem Schlitz (68, 80) der Tragscheibe (38A) angeordnet ist, und dass die erste Platte (92A) die erste Kante trägt.

6. Vorrichtung (10) nach dem vorhergehenden Anspruch, **dadurch gekennzeichnet, dass** eine zweite Platte (92B) flach an einer zweiten axialen Stirnfläche der Tragscheibe (38A) befestigt ist, wobei die zweite Platte (92B) eine Öffnung (94, 98) aufweist, die in Übereinstimmung mit dem Schlitz (68, 80) der Tragscheibe (38A) angeordnet ist, und dass die zweite Platte (92B) die zweite Kante trägt.

7. Vorrichtung (10) nach einem der vorhergehenden Ansprüche, **dadurch gekennzeichnet, dass** das Mittelstück (66, 82) der Erhebung (58, 74) einen Bund (96, 102) aufweist, wobei jede der gegenüberliegenden radialen Flächen des Bundes eine der Schulterflächen (90A, 90B, 100A, 100B) der Erhebung (58, 74) bildet.

8. Vorrichtung (10) nach den Ansprüchen 2, 3 und einem der Ansprüche 5 bis 7 in Kombination, **dadurch gekennzeichnet, dass** sie wenigstens eine Befestigungserhebung (58) umfasst, die in einem ersten zugeordneten Schlitz (68) angeordnet ist, und wenigstens eine Anlenkungserhebung (74) umfasst, die in einem zweiten zugeordneten Führungsschlitz (80) angeordnet ist, wobei jede der zugeordneten vorderen Anschlagflächen (88B, 100B) der Schlitze (68, 80) von einer ersten gemeinsamen Platte (92B) getragen wird.

9. Vorrichtung (10) nach dem vorhergehenden Anspruch, **dadurch gekennzeichnet, dass** jede der zugeordneten hinteren Anschlagflächen (88A, 100A) der Schlitze (68, 80) von einer zweiten gemeinsamen Platte (92A) getragen wird.

## Claims

1. Torsion damping device (10) in particular for a temporary coupling system, which comprises:
- a radial support washer (38A) intended to be rotated by a drive shaft;
- at least two pendular flyweights (54A, 54B) which are mounted axially one on either side of the support washer (38A) in an oscillating manner with respect to the support washer (38A);
- at least one pin (58, 74) of which each end portion (60, 76) is received in an orifice (62, 78) of an associated pendular weight (54A, 54B), a central portion (66, 82) of the pin (58, 74) being slideably received in an associated slot (68, 80) of the support washer (38A);
**characterized in that** the support washer (38A) bears a first front radial abutment face (88B, 100B) and a second rear radial abutment face (88A, 100A), the said abutment faces (88A, 88B, 100A, 100B) being arranged axially opposite one another and extending radially through the slot (68, 80), and **in that** the central portion (66, 82) of the pin (58, 74) comprises two opposed radial shoulder faces (90A, 90B, 104A, 104B), the shoulder faces (90A, 90B, 104A, 104B) of the pin being received with an axial play (D2-D3) between the two abutment faces (88A, 88B, 100A, 100B) to limit in both directions the axial movements of the pin (58, 74) with respect to the support washer (38A).

2. Device (10) according to the preceding claim, **characterized in that** the pin is a fastening pin (58), each end portion (60) of the fastening pin (58) being fastened to an associated pendular flyweight (54A, 54B), the fastening pin (58) forming a spacer which keeps the two pendular flyweights (54A, 54B) spaced apart axially by a distance (D1) which is greater than the said axial play (D2-D3) in such a way that the pendular flyweights (54A, 54B) do not come into contact with the support washer (38A).

3. Device (10) according to Claim 1, **characterized in that** the slot is a guide slot (80) and **in that** the pin is an articulation pin (74), the orifice of each pendular weight being a track (78) in which the associated end portion (76) of the articulation pin (74) is slideably received in a radial plane.

4. Device (10) according to any one of the preceding claims, **characterized in that** each abutment face (88A, 88B, 100A, 100B) of the support washer (38A) is borne by a first rim and a second rim which extend in a radially projecting manner from the axial end edges of the guide slot (68, 80).

5. Device (10) according to the preceding claim, **characterized in that** a first plate (92A) is fixed flat against a first axial end face of the support washer (38A), the first plate (92A) comprising an opening (94, 98) arranged in coincidence with the slot (68, 80) of the support washer (38A), and **in that** the first plate (92A) bears the first rim.

6. Device (10) according to the preceding claim, **characterized in that** a second plate (92B) is fixed flat against a second axial end face of the support washer (38A), the second plate (92B) comprising an opening (94, 98) arranged in coincidence with the slot (68, 80) of the support washer (38A), and **in that** the second plate (92B) bears the second rim.

7. Device (10) according to any one of the preceding claims, **characterized in that** the central portion (66, 82) of the pin (58, 74) comprises a collar (96, 102), each of the opposed radial faces of the collar forming one of the said shoulder faces (90A, 90B, 100A, 100B) of the pin (58, 74).

8. Device (10) according to Claims 2, 3 and any one of Claims 5 to 7 taken in combination, **characterized in that** it comprises at least one fastening pin (58) which is arranged in a first associated slot (68) and at least one articulation pin (74) which is arranged in a second associated guide slot (80), each of the associated front abutment faces (88B, 100B) of the slots (68, 80) being borne by a first common plate (92B).

9. Device (10) according to the preceding claim, **characterized in that** each of the associated rear abutment faces (88A, 100A) of the slots (68, 80) is borne by a second common plate (92A).
